# EUROPEAN PATENT SPECIFICATION

(11) **EP 3 093 790 B1**
(45) Date of publication and mention of the grant of the patent: **14.11.2018**
(21) Application number: 15305729.4
(22) Date of filing: 13.05.2015
(51) Int. Cl.: G06F 21/74, G06F 21/83, G06F 21/84, H04W 12/12, H04W 12/06

(54) **METHOD FOR REAL TIME PROTECTION AGAINST UNSOLICITED ACCESS TO AUTHENTICATION INFORMATION KNOWN BY A LEGITIMATE END-USER**
VERFAHREN ZUM ECHTZEITSCHUTZ GEGEN UNAUFGEFORDERTEN ZUGRIFF AUF AUTHENTIFIZIERUNGSINFORMATIONEN, DIE EINEM LEGITIMEN ENDBENUTZER BEKANNT SIND
PROCÉDÉ DE PROTECTION EN TEMPS RÉEL CONTRE UN ACCÈS NON SOLLICITÉ À DES INFORMATIONS D'AUTHENTIFICATION CONNUES PAR UN UTILISATEUR LÉGITIME

(43) Date of publication of application: 16.11.2016
(73) Proprietor: Alcatel Lucent, 91620 Nozay (FR)
(72) Inventor: PAPILLON, Serge, 91620 NOZAY (FR); MARTIN, Antony, 91620 NOZAY (FR); EL-ABED, Haithem, 91620 NOZAY (FR)
(74) Representative: Nokia EPO representatives

(56) References cited:
- EP-A1- 2 648 129
- WO-A1-2014/057123
- US-B2- 8 413 209

## Description

### FIELD OF THE INVENTION

The invention relates to a method for real time protection against unsolicited access to authentication information known by a legitimate end-user.

The invention also concerns a system for real time protection against unsolicited access to authentication information known by a legitimate end-user, a computer program comprising instructions for performing the method and a computer readable medium having loaded thereupon such computer program.

### BACKGROUND OF THE INVENTION

Smartphones are running full-fledged Operating Systems and are capable of hosting hundreds of thousands of applications. They are used to store and/or access very sensitive component of information such as banking, email accounts, corporate Intranets. Therefore, they are a target of choice of attackers who are consistently looking for a possibility of compromising them with malicious software.

Malware is (i) resident, (ii) mostly invisible to the end-users, (iii) rich of feature such as key logger, screen logger, mouse logger, data exfiltration, interception, hiding and rewriting of SMSs. The combination of these properties means that everything displayed, typed and clicked on the devices can be known by attackers, sometimes in real-time, including confidential information such as passwords and all authentication credentials known by the legitimate end-users. Even the use of a second channel to make transactions synchronous, for instance with the SMS Transaction Authentication Number (TAN) for banking, is broken given that recent attacks successfully make a link between the phone and the computer that is making the transactions.

In July 2014 at the USA Black Hat conference, the Bad USB hacking presentation introduced a new form of malware that operates from controller chips inside USB devices. USB sticks, as an example, can be reprogrammed to spoof various other device types in order to take control of a computer, exfiltrate data, or spy on the user.

Using keyboard emulation, a virus-infected smartphone could hack into the USB-connected computer. This compromises the "second factor" security model of online banking. At that time the code was not published.

However, in October 2014, two reverse-engineers published the code to achieve this attack which now makes this attack very concrete, potentially large-scale and therefore increases dramatically the risk for all USB devices including smartphones to be infected and two-factor authentication to be broken.

In the prior art, there are secure solutions to display information and get input from the end-user in the domain of authentication, transaction authentication and transaction authorization because these are highly sensitive actions, some of them with money directly involved.

In authentication solutions, there are several authentication factors, i.e. "something the user knows", "something the user has" or "something the user is". When combined, the strength of authentication is increased. Existing implementations are either running on security dedicated hardware or security dedicated software. Both of them are either implemented on a security dedicated channel, or on a unique channel, i.e. the channel where the transaction happens.

From a security perspective, the strongest authentication schemes are the ones that use security dedicated hardware on a security dedicated channel. These systems have by nature a very small attack surface that may lead to the leak of confidential information. However, these schemes require the end-user to hold something security-specific. Moreover the "something the user knows" (e.g. password) factor is static and application specific. For instance, if two banks do not share their authentication techniques, and a user has accounts at both banks, he will need two security specific components of hardware to authenticate himself.

From a usability perspective, techniques that are leveraging easy-to-install software on an existing device like smartphones are better (example [3]). However these schemes are highly prone to large scale asynchronous automated stealing attacks in our threat model.

There exist solutions having an approach that differs from the above regarding the corrupted OS. The Generic Bootstrapping Architecture (GBA) leverages the SIM to make seamless authentication of end-users. However, the GBA is using the smartphone's OS to handle the secret key and the identifier (i.e. index) of the secret in the OS itself. Both of them are revealed to the attacker in our threat model. Therefore, from a security perspective, the GBA solution is clearly not the best. The USB key based authentication scheme is asking the end-user to actively connect his authentication dedicated USB key to authenticate himself on a remote resource. From a security perspective, this is better than purely software solutions because it makes attacks against it synchronous. However there are attacks against web sessions and even ways (e.g. via phishing) to encourage the end-user to start a new session and plug his USB key in. From a usability perspective it seems nice on devices like laptops, but still unclear on smartphones.

Concerning now transaction solutions, for transaction authentication, banks and Paypal-like actors have behavior detection techniques already running. Leveraging over time their knowledge of end-user habits regarding payments, they build baselines and are able to detect deviations from these baselines, and ask for authentication when they detect a significant deviation. However these techniques require baseline initialization and do not work starting from the very first transaction. Moreover, the way they ask for authentication is one of the ways described earlier and by definition suffers from the vulnerabilities described above.

For transaction authorization and validation, the best existing solutions are systems with Transaction Authentication Number sent via a SMS (a second channel). From a security perspective, this solution is not strong anymore: till recently, this solution was strong because there were no links between the two devices, which is not the case anymore since the Eurograbber attack that happened in 2012 and Bad USB in October 2014. From a usability perspective, this solution is very good as it is leveraging an existing device each user always has, therefore not requiring handling a security dedicated device.

As a result, prior art techniques have either usability drawbacks or severe security vulnerabilities

WO 2014/057123 discloses a mobile device protecting against malware, which tries to read the input credentials. The mobile phone includes secure and non-secure modes, which are selected via a physical switch driven by a separate microprocessor and it has an indicator for showing the current mode.

### SUMMARY OF THE INVENTION

The object of the present invention, which is set out in the appended claims, is to have a secure - i.e. regarding confidentiality and integrity - means to display information and to get input from the end-user and trust in the system seamlessly over time. More particularly, from a user point of view, it is only one device as usual, with no special intervention required from him.

In a first aspect, this aim is achieved with a method for real time protection against unsolicited access to authentication information known by a legitimate end-user, the method comprising the following steps:
- determining whether information coming from a telecommunication operator have to be authenticated or not,
- visually indicating, by a secure mode indicator, that said information coming from a telecommunication operator is authentication information, said secure mode indicator being driven by a SIM card,
- enabling a regular microcontroller when said information is not authentication information, said regular microcontroller being driven by the SIM card, said regular microcontroller being accessed by an operating system,

- enabling a dedicated microcontroller when said information is authentication information, said dedicated microcontroller being driven by a SIM card,
- presenting information by a hardware information presentation means,
- inputting information by a input means,
wherein, when information is not authentication information, said hardware information presentation means and said input means are accessed by said regular microcontroller, and when information is authentication information, the method implements one of the following step :
a) said hardware information presentation means and said input means are exclusively accessed by said dedicated microcontroller, or,
b) said input means and an additional hardware information presentation means are exclusively accessed by said dedicated microcontroller, said additional hardware information presentation means displaying inputted information from said input means, or,
c) an additional hardware information presentation means and an additional input means are exclusively accessed by said dedicated microcontroller, said additional hardware information presentation means displaying inputted information from said input means.

According to an embodiment, the method comprising step a) comprises:
- said hardware presentation means is a touchscreen display layer,
- said input means is a touchscreen touch sensor layer, said touchscreen touch sensor layer being implemented via said touchscreen display layer.

According to an embodiment, the method comprising step b) comprises:
- said hardware information presentation means is a touchscreen display layer,
- said additional hardware information presentation means is a dedicated display layer,
- said input means is a touchscreen touch sensor layer comprising keys, said touchscreen touch sensor layer being implemented via said touchscreen display layer or via said dedicated display layer, keys of said touchscreen touch sensor layer being mixed when said touchscreen touch sensor layer is implemented via said dedicated display layer.

According to an embodiment, the method comprising the step c), wherein:
- said input means is a tactile layer, preferentially a touchscreen touch sensor layer,
- said hardware information presentation means is a display layer, preferentially a touchscreen display layer, which displays inputted information which has not to be authenticated,
- said additional input means is a dedicated tactile layer, preferentially a second touchscreen touch sensor layer,
- said additional hardware information presentation means is a dedicated display layer, preferentially a second touchscreen display layer, which displays inputted information from said dedicated tactile layer.

According to an embodiment implementing the step c), said dedicated tactile layer and said dedicated display layer are, transparently to the end-user, added on top of said display layer.

According to an embodiment, the method comprises the following steps:
- sending, from the SIM card, a message indicating whether information is authentication information or not to a switch (4),
- isolating said regular microcontroller from SIM card via said switch (4),
- enabling said dedicated microcontroller via said switch (4),
- enabling said secure mode indicator via said switch (4).

According to an embodiment, the method comprises the following steps:
- enabling said dedicated microcontroller via a dedicated physical button that triggers or enforces the switching via a switch (4),
- optionally the physical button also
   o notifies the SIM card itself so that the SIM card is now only waiting for packets coming from the network that are authentication related,
   o or notifies the telecommunication operator himself (via a text message for instance) so that said telecommunication operator can filter momentarily the packets to only forward authentication requests - and disable the filtering once the button is released (which also send another SMS message or is timer based)
- isolating said regular microcontroller from said SIM card via said switch (4),
- enabling said secure mode indicator via said switch (4).

According to an embodiment of the method implementing the step b) or c) :
- said dedicated display layer and said dedicated tactile layer are connected to said dedicated microcontroller,
- said display layer and said tactile layer are connected to said regular microcontroller,
- said dedicated microcontroller and said regular microcontroller are connected to a switch which is connected to a SIM card and which is driven by said SIM card, said switch being connected at an output of the SIM card.

According to an embodiment of the method implementing the step a):
- said dedicated microcontroller and said regular microcontroller are connected to a switch which is driven by said SIM card, said switch being connected at an output of the SIM card,
- said touchscreen display layer and said touchscreen touch sensor layer are connected to said switch to be driven by said dedicated microcontroller or by said regular microcontroller, access of said regular microcontroller to said touchscreen display layer and said touchscreen touch sensor layer being prevented by the switch when said dedicated microcontroller is accessing the touchscreen display layer and the touchscreen touch sensor layer.

According to an embodiment of the method implementing the step b):
- said dedicated display layer is connected to said dedicated microcontroller,
- said touchscreen display layer is connected to said regular microcontroller,
- said dedicated microcontroller and said regular microcontroller are connected to a switch which is connected to a SIM card which is exclusively driven by said SIM card, said switch being connected at an output of the SIM card
- said touchscreen touch sensor layer is connected to said switch to be driven by said dedicated microcontroller or by said regular microcontroller, the access of said regular microcontroller to said touchscreen touch sensor layer being prevented by the switch when said dedicated microcontroller is accessing the touchscreen touch sensor layer.

According to an embodiment of the method implementing the step b) or c), the method comprises the step of displaying the secure mode indicator into said dedicated display layer, the secure mode indicator being a customized and easy to remember component of information which was previously stored locally inside the SIM card, the customized and easy to remember component of information being displayed during the whole secure operation managed by the SIM card.

According to an embodiment, said secure mode indicator is a light-emitting diode connected and driven by the SIM card, the light-emitting diode being active during the whole secure operation managed by the SIM card.

According to an embodiment, said dedicated microcontroller and said switch are combined as one single electronic component.

According to an embodiment of the method implementing the step b) or c), the method comprises the step of:
- turning off the backlight of said display layer or touchscreen display layer, when step b) or c) is implemented, or,
- making said display layer or touchscreen display layer opaque, when step b) or c) is implemented, or,
- dedicating a set of colors and fonts to said dedicated display layer, when step b) or c) is implemented.

A second aspect of the invention provides a computer program product comprising computer-executable instructions for performing a method according to any of the embodiments herein mentioned.

A third aspect of the invention provides a computer readable medium having recorded thereon a computer program comprising program instructions, the computer program being loadable into a data-processing unit and adapted to cause execution of the method according to any of the embodiments herein mentioned when the computer program is run by the data-processing unit.

A fourth aspect of the invention provides a system for real time protection against unsolicited access to authentication information known by a legitimate end-user, the system comprising:
- a SIM card provided with a dedicated application adapted to drive a switch, said SIM card being configured to determine whether information coming from a telecommunication operator has to be authenticated or not,
- a switch adapted to be driven by the SIM card, said switch being connected at an output of the SIM card, said switch having a first position corresponding to information that has not to be authenticated and a second position corresponding to said authentication information,
- a secure mode indicator configured to indicate whether the switch is in said second position, said secure mode indicator being configured to be driven by the SIM card,
- a regular microcontroller connected at a first output of said switch, said regular microcontroller being configured to be driven by the SIM card and accessed by an operating system, said regular microcontroller being arranged to be enabled when the switch is in said first position,
- a dedicated microcontroller connected at a second output of said switch or combined with a switch so as to define one single electronic component, said second microcontroller being configured to be driven by the SIM card, said second microcontroller being configured to be enabled when the switch is in said second position,
- a hardware information presentation means,
- an input means,
the system is arranged so that:
- when the switch is in said first position, said hardware information presentation means and said input means are configured to be accessed by said regular microcontroller.

A fifth aspect of the invention provides a cell phone comprising a system for real time protection against unsolicited access to authentication information known by a legitimate end-user as described above.
The dependent claims define various embodiments of the invention.

Further features and advantages of the invention will appear from the following description of embodiments of the invention, given as non-limiting examples, with reference to the accompanying drawings listed hereunder.

### BRIEF DESCRIPTION OF THE DRAWING

Fig.1 represents a flowchart of an example of a first embodiment of the proposed method and system.
Fig. 2 represents a flowchart of an example of a second embodiment of the proposed method and system.

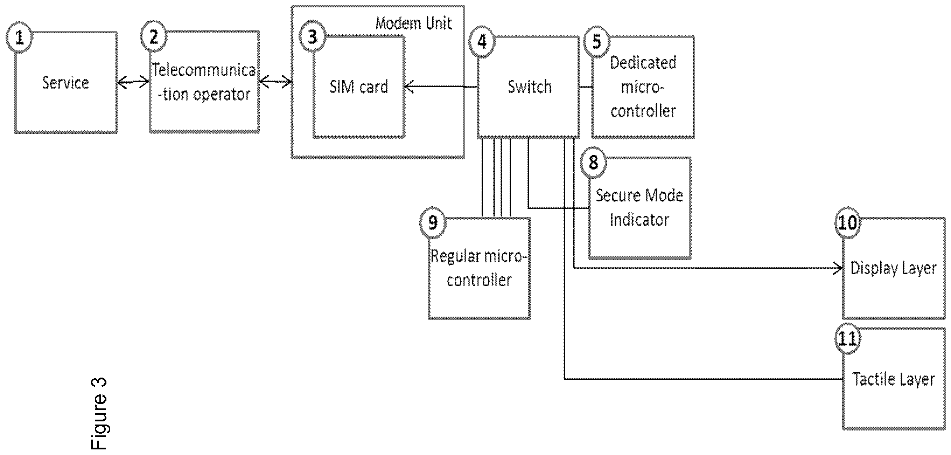

Fig. 3 represents a flowchart of an example of a third embodiment of the proposed method and system.
Fig. 4 represents a flowchart of an example of a scenario implementing the method

### DETAILED DESCRIPTION OF THE INVENTION

Aspects of the invention are directed to real time protection against unsolicited access to authentication known by a legitimate end-user.

The principle is to integrate a security operations-exclusive device or components of hardware into an existing smartphone to give the end-user the illusion he is dealing with just one device. Security is improved while keeping extreme usability.

The dedicated device is made of a hardware information presentation means (typically a display) and an input means (typically a tactile, pressure, gesture recognition) combined, driven and hardwired via dedicated microcontrollers to the SIM card 3. For example, the display and input layers are on top of or below the existing layers, therefore being transparent from an end-user perspective (no second device) and convenient at the same time. Advantageously, the classic display does not fully overlap on the security dedicated display.

The secure mode can be initiated from the trusted operator that triggers the SIM card that itself i) drives the disabling of the regular display and input microcontrollers, (ii) enables the secure mode indicator 8 (if LED), (iii) enables its own display and input secure means - secure because with a dedicated microcontroller not shared with the smartphone regular devices that can be mastered by the attacker in the threat model explained above.

To make the end-user aware he is receiving the legitimate, i.e. not tampered with information, at the initiative of the SIM card 3 when triggered by the trusted operator any critical security operations is preceded with a secure mode indicator 8 to inform the end-user that he is actually receiving information from a trusted chain of elements that he can himself trust. Actually, the information displayed after the secure mode indicator 8 is coming from a trusted chain of elements with few actors involved.

Further the first, second and third embodiments are non-limiting examples. They only illustrate several preferred implementations of the method. Thus, the description of the first, second and third embodiments can comprise features which must not be considered as limiting.

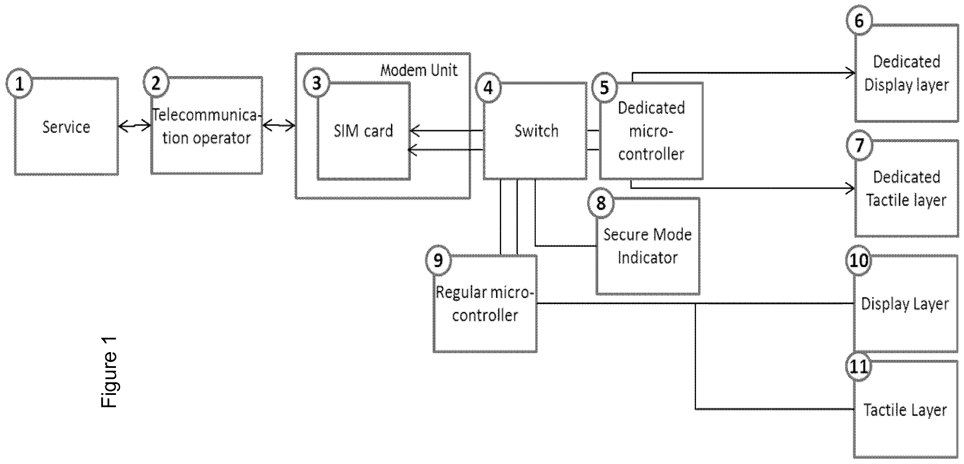

According to a first embodiment shown in figure 1, there is described a combination of a secure mode indicator 8 that is preferably a LED or an indicator displayed on the dedicated display layer 6, a SIM card 3 provided with the addition of application applets, software changes on the SIM card 3 with the addition of application applets, hardware changes on the smartphone using dedicated hardware such as a switch 4, a dedicated microcontroller, a dedicated display layer 6, and a dedicated input means 7 such as a tactile layer.

On the smartphone, the dedicated physical layer is used to display only some authentication information considered as critical via a dedicated display layer 6 and to input authentication information via a dedicated tactile layer 7. These layers may be added transparently to the end-user on top of existing display 10 on their smartphones.

At a given point in time, there is only one active display and only one active tactile layer. This is exclusively managed by the SIM card 3 preferably via a switch 4 or "zone switch" and the new dedicated microcontroller 5 (Figure 1, item 5) dedicated to drive the dedicated display layer 6 and the dedicated tactile layer 7 with information coming from the SIM card 3 (never from the OS) and to isolate the regular microcontroller 9 driven by the OS.

The switch 4 or the dedicated microcontroller 5 drives a security mode indicator 8 that may be a LED as illustrated in Figure 1.

For instance, the service 1 such as a bank requests the use of the invention to the telecommunication operator 2 that uploads an applet on the SIM card 3 and triggers the SIM card 3. The SIM card 3 may then send some message (APDU) that is translated by the switch 4 into a set of actions. The set of actions may be as follows:
- isolating the regular microcontroller 9 that is indeed linked to the display layer 10, which is a regular display, and to the tactile layer 11,
- enabling the dedicated microcontroller 5 that enables the dedicated display layer 6 and the dedicated tactile layer 7,
- enabling the secure mode indicator 8 during the whole transaction.

According to this first embodiment, wherein, when information is not authentication information, said hardware information presentation means 10 and said input means 11 are accessed by said regular microcontroller 9, and when information is authentication information, an additional hardware information presentation means 6 and an additional input means 7 are exclusively accessed by said dedicated microcontroller 5, said additional hardware information presentation means 6 displaying inputted information from said additional input means 7, , the method may further comprise a step of displaying the authentication information in a part of the touchscreen display where:
- said hardware presentation mean 10 (or the touchscreen display layer which is not dedicated) cannot display anything (any information),
- said additional hardware presentation means 6 can display something (some information).

This part of the touchscreen display is thus only implemented by the additional hardware presentation means 6. This is thus possible to know that the authentication information is secured because they are displayed in said part of the touchscreen display which is only covered by the additional hardware presentation means 6. Thus, it defines a secure mode indicator 8.

According to this embodiment, said input means 11 may either be a keyboard or preferentially, a (first) touchscreen touch sensor layer and said additional input means 7 may either be a keyboard or preferentially, a second touchscreen touch sensor layer. Said hardware information presentation means 10 is a display layer, preferentially a touchscreen display layer, which displays inputted information which has not to be authenticated. Said additional hardware information presentation means 6 is a dedicated display layer, preferentially a second touchscreen display layer, which displays inputted information from said additional input means 7.

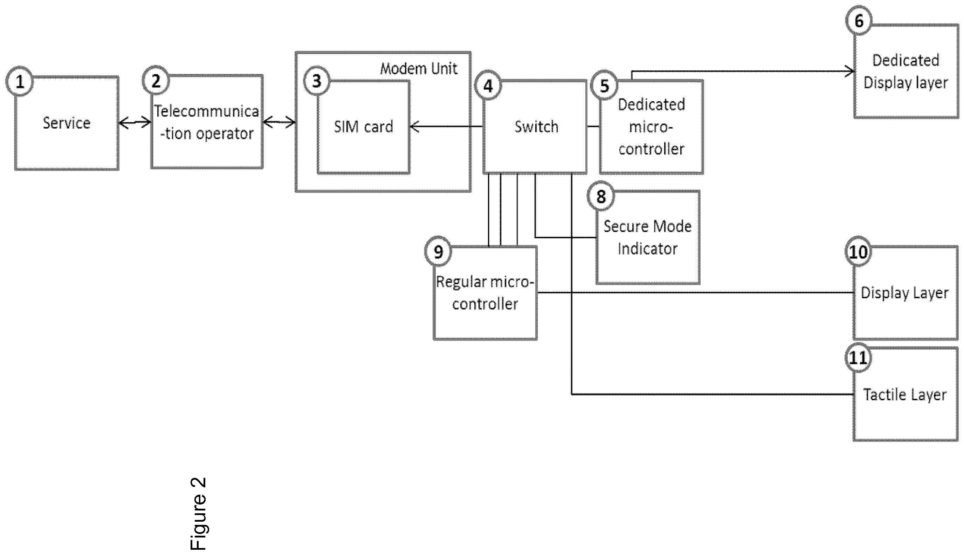

In a second embodiment shown in figure 2, the principle is to have the dedicated physical layer to display, via the dedicated display layer 6, only some critical information and this time to leverage the existing smartphone touchscreen touch sensor layer layer 11 to catch the end-user actions. This embodiment may be convenient from an industrialization/cost perspective.

The wiring between the switch 4 and the regular microcontroller 9 is different: this time the switch 4 is wired to the existing touchscreen layer 11 to request it when the secure mode is triggered by the SIM card 3.

Classically, the switch 4 simultaneously removes the access from the regular controller 9 (only one input at a time) to the touchscreen touch sensor layer 11.

According to this second embodiment, wherein, when information is not authentication information, said hardware information presentation means 10 and said input means 11 are accessed by said regular microcontroller 9, and when information is authentication information, said input means 11 and an additional hardware information presentation means 6 are exclusively accessed by said dedicated microcontroller 5, said additional hardware information presentation means 6 displaying inputted information from said input means 11, the method may further comprise a step of displaying the authentication information in a part of the touchscreen display where:
- said hardware presentation mean 10 (or the touchscreen display layer which is not dedicated) cannot display anything (any information),
- said additional hardware presentation means 6 can display something (some information).

Said part of the touchscreen display is thus only implemented by the additional hardware presentation means 6. This is thus possible to know that the authentication information are secured because they are displayed in said part of the touchscreen display which is only covered by the additional hardware presentation means 6. Thus, it defines a secure mode indicator 8.

In a third embodiment, the principle is to share the existing smartphone touchscreen to display via a touchscreen display layer 10 and catch the end-user actions via a touchscreen touch sensor layer 11. This embodiment is by nature the less secure because of the sharing, but may be convenient from an industrialization/cost perspective.

As known by the man skilled in the art, the wording "touchscreen display layer" and the wording "touchscreen touch sensor layer" are defined with reference to each other. In particular, the touchscreen display layer is defined as a hardware presentation means and the touchscreen touch sensor layer is defined as an input means in such a manner so that the touchscreen display layer displays inputted information which are typed on the touchscreen touch sensor layer. Thus, touchscreen display layer refers to function and components for displaying on the touchscreen and touchscreen touch sensor layer refers to function and components of the touchscreen for inputting information via the touchscreen.

The wiring between the switch 4 and the regular microcontroller 9 is different. The switch 4 is wired to the existing display and tactile layers 10, 11 to request when the secure mode is triggered by the SIM card 3 (and simultaneously removes the access from the main controller - only one input at a time). Classically, the switch 4 simultaneously removes the access from the regular controller 9 (only one input at a time) to the touchscreen display layer 10 and to the touchscreen touch sensor layer 11.

According to this third embodiment, wherein, when information is not authentication information, said hardware information presentation means 10 and said input means 11 are accessed by said regular microcontroller 9, and when information is authentication information, said input means 11 and said hardware information presentation means 10 are exclusively accessed by said dedicated microcontroller 5, said hardware information presentation means 10 displaying inputted information from said input means 11.

Further features are alternative that may be applied to the principle of first, second and third embodiments.

The secure mode indicator 8 is fundamental to the solution. As two layers of display are combined, the regular display 10 and the security/confidential information display 6, it is fundamental to explicitly inform the end-user about which layer he is actually looking at a given point in time. It avoids phishing-type attacks that would try to make the end-user believe he is actually looking at trusted information and can safely give his inputs but he is just a victim of an attack perpetrated from the OS itself. This indicator 8 is active during the whole secure operation managed by the SIM card 3. The secure mode indicator 8 may alternatively be a dedicated hardware indicator such as a light-emitting diode (LED) that lights up when the secure layer is active, or a personalized and easy to remember component of information such as a drawing.

According to an embodiment, the secure mode indicator 8 is a visible indicator 8 such as a LED exclusively driven and triggered by the SIM card 3 when a secure action/transaction starts. This involves the dedicated microcontroller 5 driving this physical indicator.

According to an embodiment, a personalized secure mode indicator 8 is used and is easy to remember information that is customized by the end-user and stored locally on the SIM card 3. The customization is done at least by the end-user at the bootstrap and after that, each time there is a secure mode handled by the SIM card 3, the personalized secure mode indicator 8 is displayed during the whole secure operation managed by the SIM card 3. In this case, there are two major stages: offline and online.

Offline, from a SIM card perspective: the SIM card manufacturer provisions the SIM card 3 with a few secure mode indicators (e.g. pictures that can be considered as a secrets) and associated properties that can be applied to customize the secure mode indicator 8 (e.g. colors).

Online, bootstrap of the end-user device: once the end-user receives the SIM card 3, he puts it inside the device such as his smartphone. When the smartphone boots, all the hardware is started and managed by the smartphone's operating system drivers except the dedicated hardware including the dedicated display layer 6 and/or the dedicated tactile layer 7.

At the first bootstrap of the smartphone, its OS will make a request for SIM card 3 that first requires a PIN code to be unlocked. After this step, the SIM card 3 automatically connects to the dedicated display layer 6 and to the dedicated tactile layer 7 to start the customization of the secure mode indicator 8. Once selected, the final secure mode indicator 8 is stored locally inside the SIM card 3. This secret is never shared nor is it transmitted over the air.

The proposed invention may involve software changes on the SIM card 3. The SIM card 3 is provisioned with applets to drive a switch 4. The SIM card 3 is also provisioned with a dedicated application (applet) to handle the actual transaction display and sensing events. This application is audited and validated from a security perspective by the telco operator. The SIM application toolkit (3GPP TS 51.014 V4.5.0) is used to download over the air and store applications in the SIM card control, not in the smartphone OS.

The downloading is controlled by the telco provider and happens via SMS (short message service) transparently to the end-user.

The proposed invention may include new hardware in addition to the regular device that may be used on any smartphone. For instance, the switch 4 may or may not be combined to the dedicated microcontroller 5 depending on the electronic design. The fundamental part is that the switch 4 feature is driven exclusively from the SIM card 3 and takes precedence over the regular microcontroller 9. For integration purpose, we may have switches driven by the "new microcontroller" in between the regular layers and their own controllers if necessary to ensure there is only one active device at a time. We may use some alternative solutions such as a hardware switch that turn off the backlight of the regular display, an opacifier to make the regular screen opaque and make the secure one prevalent or a dedicated set of colors and fonts on the secure mode display. It is possible to use multiple SIM cards terminals to dedicate one of the SIM to the described invention.

The proposed invention may include a radio module which is typically accessed through a serial line, in this invention; we have a switch 4 which is typically a programmable FPGA that arbitrates access to the radio module (and the SIM card 3).

According to the first embodiment, when the secure mode is requested remotely by the telecommunication operator 2 through a special message, switch 4 activates the secure path through the step of redirecting serial lines from the regular microcontroller 9 to the dedicated microcontroller 5.

According to the second embodiment, when the secure mode is requested remotely by the telecommunication operator 2 through a special message, switch 4 activates the secure path through the step of redirecting serial lines and the input means from the regular microcontroller 9 to the dedicated microcontroller 5.

According the third embodiment, when the secure mode is requested remotely by the telecommunication operator 2 through a special message, switch 4 activates the secure path through the step of redirecting serial lines, the input means 11 and the hardware information presentation means 10 from the regular microcontroller to the dedicated microcontroller 5

As can be seen above, potential applications are transaction authentication, transaction authorization, authentication including with biometrics. Biometrics by nature does have a strong requirement on the trusted chain of elements because biometric information is persistent and once leaked is a severe issue. One example of biometric input our proposed invention can securely provide is an electronic signature.

In what follows, there is described a scenario example in which there are personalized a secure mode indicator 8, a dedicated display layer 6, a dedicated tactile layer 7 and a unique SIM card 3.

Offline, from a SIM card perspective:
- the SIM card manufacturer provisions the SIM card 3 with a few Secure Mode Indicators (e.g. pictures that can be considered as secrets) and associated Properties that can be applied to customize the secure mode indicator 8 (e.g. colors).

Online, bootstrap of the end-user device:
- once the end-user receives the SIM card, he puts it inside the device such as his smartphone. When the smartphone boots, all the hardware is started and managed by the smartphone operating system drivers except the dedicated hardware including the dedicated display 6. At the first bootstrap of the smartphone, its OS will make a request to the SIM card 3 that first requires a PIN code to be unlocked. After this step, the SIM card 3 automatically connects to the dedicated display and tactile layers 6, 7 to start the customization of the secure mode indicator 8. Once selected, the final secure mode indicator 8 is stored locally inside the SIM card 3. This secret is never shared nor transmitted over the air.

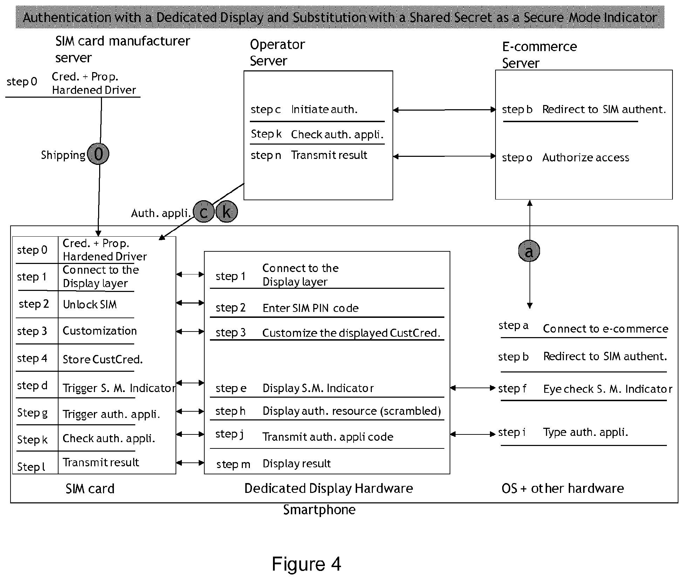

Online, at the authentication stage when browsing on a web site (Fig. 4):
- when the end-user connects to a web site/application such as his bank (Fig. 4, step a) and authentication is triggered, the end-user is seamlessly redirected (Fig. 4, step b) to an authentication server managed by the telecommunication operator 2, that leverages credentials inside the SIM card 3 (according to the SIM application 3GPP TS 51.014 V4.5.0 capabilities - credentials and applications are previously securely downloaded over the air via the SIM application toolkit).

The operator server triggers SIM card 3 authentication (Fig. 1, step c) over the air. The SIM card 3 pauses this request and triggers itself the first authentication step (Fig. 4, step d), i.e. it retrieves personalized secure mode indicator 8 (CustCred.) and sends it to the dedicated Interactive display that displays it via the dedicated microcontroller 5 (Fig. 4, step e). At this stage, the end-user checks against his memory that this is the correct CustCred that is displayed (Fig. 4, step f). It gives him confidence that he is now interacting directly with the SIM card 3 via the dedicated display 6.

Then the SIM card 3 resumes the initial applicative authentication request (Fig. 1, step g) and transmits the authentication interactive pad 7 to the dedicated display 6 that displays it (Fig. 1, step h).

The end-user types the e-commerce credential (Fig. 1, step i), that is transmitted (Fig. 1, step j) to the SIM card 3 that checks with the operator server for its correctness (Fig. 1, step k).

The result of this check is sent to the end-user via the dedicated display 6 (Fig. 1, steps 1-m) and also via the website that confirms or declines the final transaction (Fig. 1, steps n-o).

Note that steps 0 to 4 are offline steps for the SIM card offline and online provisioning, as described previously.

## Claims

1. A method for real time protection against unsolicited access to authentication information known by a legitimate end-user, the method comprising the following steps :
- determining by a SIM card (3) whether information coming from a telecommunication operator (2) have to be authenticated or not,
- visually indicating, by a secure mode indicator (8), that said information coming from a telecommunication operator (2) is authentication information, said secure mode indicator (8) being driven by a SIM card (3),
- enabling a regular microcontroller (9) by a switch (4) when said information is not authentication information, said regular microcontroller (9) being driven by the SIM card (3) and connected to a first output of said switch (4), said switch (4) being connected to an output of the SIM card (3) such as to be driven by said SIM card (3), said regular microcontroller (9) being accessed by an operating system,
- enabling a dedicated microcontroller (5) by the switch (4) when said information is authentication information, said dedicated microcontroller (5) being driven by the SIM card (3) and connected to a second output of said switch (4) or combined with the switch (4) so as to define one single electronic component,
- presenting information by a hardware information presentation means (10),
- inputting information by an input means (11),
wherein, when said information is not authentication information, said hardware information presentation means (10) and said input means (11) are accessed by said regular microcontroller (9), and when said information is authentication information, the method implements one of the following steps based on wirings between said switch (4) and the regular microcontroller (9) in view of the authentication information:
a) said hardware information presentation means (10) and said input means (11) are exclusively accessed by said dedicated microcontroller (5), or,
b) said input means (11) and an additional hardware information presentation means (6) are exclusively accessed by said dedicated microcontroller (5), said additional hardware information presentation means (6) displaying inputted information from said input means (11), or,
c) an additional hardware information presentation means (6) and an additional input means (7) are exclusively accessed by said dedicated microcontroller (5), said additional hardware information presentation means (6) displaying inputted information from said additional input means (7).

2. The method according to claim 1 comprising the step a), wherein:
- said hardware presentation means (10) is a touchscreen display layer,
- said input means (11) is a touchscreen touch sensor layer, said touchscreen touch sensor layer (11) being implemented via said touchscreen display layer (10).

3. The method according to claim 2, wherein:
said touchscreen display layer and said touchscreen touch sensor layer are connected to said switch (4) to be driven by said dedicated microcontroller (5) or by said regular microcontroller (9), the access of said regular microcontroller (9) to said touchscreen display layer and said touchscreen touch sensor layer being prevented by the switch (4) when dedicated microcontroller (5) is accessing the touchscreen display layer and the touchscreen touch sensor layer.

4. The method according to claim 1 comprising the step b), wherein:
- said hardware information presentation means (10) is a touchscreen display layer,
- said additional hardware information presentation means is a dedicated display layer (6),
- said input means (11) is a touchscreen touch sensor layer comprising keys, said touchscreen touch sensor layer (11) being implemented via said touchscreen display layer (10) or via said dedicated display layer (6), said keys of touchscreen touch sensor layer (11) being mixed when touchscreen touch sensor layer (11) is implemented via said dedicated display layer (6).

5. The method according to claim 4, wherein:
- said dedicated display layer (6) is connected to said dedicated microcontroller (5),
- said touchscreen display layer is connected to said regular microcontroller (9),
said touchscreen touch sensor layer (11) is connected to said switch (4) to be driven by said dedicated microcontroller (5) or by said regular microcontroller (9), the access of said regular microcontroller (9) to said touchscreen touch sensor layer being prevented by the switch (4) when said dedicated microcontroller (5) is accessing the touchscreen touch sensor layer.

6. The method according to claim 1 comprising the step c), wherein:
- said input means (11) is a tactile layer (11), preferentially a touchscreen touch sensor layer,
- said hardware information presentation means (10) is a display layer, preferentially a touchscreen display layer, which displays inputted information which has not to be authenticated,
- said additional input means (7) is a dedicated tactile layer, preferentially a second touchscreen touch sensor layer,
- said additional hardware information presentation means (6) is a dedicated display layer, preferentially a second touchscreen display layer, which displays inputted information from said dedicated tactile layer (7).

7. The method according to claim 6, wherein said dedicated tactile layer (7) and said dedicated display layer (6) are, transparently to the end-user, added on top of said display layer (10).

8. The method according to any one of claims 6 or 7, wherein:
- said dedicated display layer (6) and said dedicated tactile layer (7) are connected to said dedicated microcontroller (5),
- said display layer (10) and said tactile layer (11) are connected to said regular microcontroller (9).

9. The method according to any one of claims 4 to 8, wherein the method comprises the step of displaying the secure mode indicator (8) into said dedicated display layer (6), the secure mode indicator (8) being a customized and easy to remember component of information which was previously stored locally inside the SIM card (3), the customized and easy to remember component of information being displayed during the whole secure operation managed by the SIM card (3).

10. The method according to any one of claims 1 to 9, wherein the method comprises the following steps:
- sending, from the SIM card (3), a message indicating whether information is authentication information or not to the switch (4),
- isolating said regular microcontroller (9) from the SIM card (3) via said switch (4),
- enabling said dedicated microcontroller (5) via said switch (4),
- enabling said secure mode indicator (8) via said switch (4).

11. The method according to any one of claims 1 to 9, wherein the method comprises the following steps:
- enabling said dedicated microcontroller (5) via a dedicated physical button that triggers or enforces the switching via a switch (4),
- isolating said regular microcontroller (9) from SIM card (3) via said switch (4),
- enabling said secure mode indicator (8) via said switch (4).

12. The method according to any one of claims 1 to 11, wherein said secure mode indicator (8) is a light-emitting diode connected and driven by the SIM card (3), the light-emitting diode being active during the whole secure operation managed by the SIM card (3).

13. A computer program product comprising computer-executable instructions, which when executed by a computer make the computer perform a method according to any of the claims 1 to 12.

14. A computer readable medium having a computer program comprising program instructions, the computer program being loadable into a data-processing unit and adapted to cause execution of the method according to any of the claims 1 to 12 when the computer program is run by the data-processing unit.

15. A system for real time protection against unsolicited access to authentication information known by a legitimate end-user, the system comprising:
- a SIM card (3) provided with a dedicated application adapted to drive a switch (4), said SIM card (3) being configured to determine whether information coming from a telecommunication operator (2) has to be authenticated or not,
- a switch (4) adapted to be driven by the SIM card (3), said switch (4) being connected at an output of the SIM card (3), said switch (4) having a first position corresponding to said information coming from the telecommunication operator that has not to be authenticated and a second position corresponding to said authentication information coming from the telecommunication operator,
- a secure mode indicator (8) configured to indicate whether the switch (4) is in said second position, said secure mode indicator (8) being configured to be driven by the SIM card (3),
- a regular microcontroller (9) connected at a first output of said switch (4), said regular microcontroller (9) being configured to be driven by the SIM card (3) and accessed by an operating system, said regular microcontroller (9) being arranged to be enabled when the switch (4) is in said first position,
- a dedicated microcontroller (5) connected at a second output of said switch (4) or combined with a switch (4) so as to define one single electronic component, said dedicated microcontroller (5) being configured to be driven by the SIM card (3), said dedicated microcontroller (5) being configured to be enabled when the switch (4) is in said second position,
- a hardware information presentation means (10),
- an input means (11),
said system being arranged so that:
- when the switch (4) is in said first position, said hardware information presentation means (10) and said input means (11) are configured to be accessed by said regular microcontroller (9),
- when the switch (4) is in said second position and based on wirings between said switch (4) and the regular microcontroller (9) in view of the authentication information:
o said hardware information presentation means (10) and said input means (11) are configured to be exclusively accessed by said dedicated microcontroller (5), or,
o said input means (11) and an additional hardware information presentation means (6) are configured to be exclusively accessed by said dedicated microcontroller (5), said additional hardware information presentation means (6) being configured to display inputted information from said input means (11), or,
o an additional hardware information presentation means (6) and an additional input means (7) are configured to be exclusively accessed by said dedicated microcontroller (5), said additional hardware information presentation means (6) being configured to display inputted information from said input means (7).

## Patentansprüche

1. Verfahren für den Echtzeitschutz vor unaufgefordertem Zugriff auf Authentifizierungsinformation, die einem rechtmäßigen Endnutzer bekannt ist, wobei das Verfahren die folgenden Schritte umfasst:
- Bestimmen bei einer SIM-Karte (3), ob Information, die von einem Telekommunikationsanbieter (2) stammt, authentifiziert werden muss oder nicht,
- visuelles Anzeigen durch einen Sicherer-Modus-Indikator (8), dass besagte Information, die von einem Telekommunikationsanbieter (2) stammt, Authentifizierungsinformation ist, wobei besagte Sicherer-Modus-Anzeige (8) von einer SIM-Karte (3) gestützt wird,
- Befähigen eines regulären Mikrocontrollers (9) durch einen Schalter (4), wenn besagte Information keine Authentifizierungsinformation ist, wobei besagter reguläre Mikrocontroller (9) von der SIM-Karte (3) gestützt wird und verbunden ist mit einem ersten Ausgang besagten Schalters (4), wobei besagter Schalter (4) mit einem Ausgang der SIM-Karte (3) verbunden ist, um von besagter SIM-Karte (3) gestützt zu werden, wobei auf besagten Mikrocontroller (9) zugegriffen wird von einem Betriebssystem,
- Befähigen eines dedizierten Mikrocontrollers (5) durch den Schalter (4), wenn besagte Information Authentifizierungsinformation ist, wobei besagter Mikrocontroller (5) von der SIM-Karte (3) gestützt wird und verbunden ist mit einem zweiten Ausgang besagten Schalters (4) oder kombiniert mit dem Schalter (4), um eine einzelne elektronische Komponente zu definieren,
- Präsentieren von Information durch ein Hardware-Informationspräsentationsmittel (10),
- Eingeben von Information durch ein Eingabemittel (11),
wobei, wenn besagte Information keine Authentifizierungsinformation ist, auf besagtes Hardware-Informationspräsentationsmittel (10) und besagtes Eingabemittel (11) zugegriffen wird durch besagten regulären Mikrocontroller (9), und, wenn besagte Information Authentifizierungsinformation ist, implementiert das Verfahren einen der folgenden Schritte auf Grundlage von Verkabelungen zwischen besagtem Schalter (4) und dem regulären Mikrocontroller (9) hinsichtlich der Authentifizierungsinformation:
a) wobei auf besagtes Hardware-Informationspräsentationsmittel (10) und besagtes Eingabemittel (11) ausschließlich durch besagten dedizierten Mikrocontroller (5) zugegriffen wird, oder
b) wobei auf besagtes Eingabemittel (11) und auf ein zusätzliches Hardware-Informationspräsentationsmittel (6) ausschließlich zugegriffen wird durch besagten dedizierten Mikrocontroller (5), wobei besagtes Hardware-Informationspräsentationsmittel (6) eingegebene Information von besagtem Eingabemittel (11) anzeigt, oder
c) auf ein zusätzliches Hardware-Informationspräsentationsmittel (6) und auf ein zusätzliches Eingabemittel (7) ausschließlich zugegriffen wird durch besagten dedizierten Mikrocontroller (5), wobei besagtes zusätzliches Hardware-Informationspräsentationsmittel (6) eingegebene Information von besagtem zusätzlichem Eingabemittel (7) anzeigt.

2. Verfahren nach Anspruch 1, umfassend den Schritt a), wobei:
- besagtes Hardware-Präsentationsmittel (10) eine Touchscreen-Anzeigeschicht ist,
- besagtes Eingabemittel (11) eine Touchscreen-Sensorschicht ist, wobei besagte Touchscreen-Sensorschicht (11) implementiert ist über besagte Touchscreen-Anzeigeschicht (10).

3. Verfahren nach Anspruch 2, wobei:
besagte Touchscreen-Anzeigeschicht und besagte Touchscreen-Sensorschicht mit besagtem Schalter (4) verbunden sind, zum Stützen durch besagten dedizierten Mikrocontroller (5) oder durch besagten regulären Mikrocontroller (9), wobei der Zugriff des besagten regulären Mikrocontroller (9) auf besagte Touchscreen-Anzeigeschicht und besagte Touchscreen-Sensorschicht verhindert wird durch den Schalter (4), wenn der dedizierte Mikrocontroller (5) auf die Touchscreen-Anzeigeschicht und die Touchscreen-Sensorschicht zugreift.

4. Verfahren nach Anspruch 1, umfassend den Schritt b), wobei:
- besagtes Hardware-Informationspräsentationsmittel (10) eine Touchscreen-Anzeigeschicht ist,
- besagtes zusätzliche Hardware-Informationspräsentationsmittel eine dedizierte Anzeigeschicht (6) ist,
- besagtes Eingabemittel (11) eine Touchscreen-Sensorschicht ist, die Schlüssel umfasst, wobei besagte Touchscreen-Sensorschicht (11) implementiert wird über besagte Touchscreen-Anzeigeschicht (10) oder über besagte dedizierte Anzeigeschicht (6), wobei besagte Schlüssel der Touchscreen-Sensorschicht (11) gemischt werden, wenn die Touchscreen-Sensorschicht (11) implementiert wird über besagte dedizierte Anzeigeschicht (6).

5. Verfahren nach Anspruch 4, wobei:
- besagte dedizierte Anzeigeschicht (6) verbunden ist mit besagtem dedizierten Mikrocontroller (5),
- besagte Touchscreen-Anzeigeschicht verbunden ist mit besagtem regulären Mikrocontroller (9),
wobei besagte Touchscreen-Sensorschicht (11) verbunden ist mit besagtem Schalter (4) zum Stützen durch besagten dedizierten Mikrocontroller (5) oder durch besagten regulären Mikrocontroller (9), wobei der Zugriff besagten regulären Mikrocontrollers (9) auf besagte Touchscreen-Sensorschicht verhindert wird durch den Schalter (4), wenn besagter dedizierte Mikrocontroller (5) auf die Touchscreen-Sensorschicht zugreift.

6. Verfahren nach Anspruch 1, umfassend den Schritt c), wobei:
- besagtes Eingabemittel (11) eine taktile Schicht (11) ist, bevorzugt eine Touchscreen-Sensorschicht,
- besagtes Hardware-Informationspräsentationsmittel (10) eine Anzeigeschicht ist, bevorzugt eine Touchscreen-Anzeigeschicht, welche eingegebene Information anzeigt, die nicht authentifiziert worden ist,
- besagtes zusätzliche Eingabemittel (7) eine dedizierte taktile Schicht ist, bevorzugt eine zweite Touchscreen-Sensorschicht,
- besagtes zusätzliche Hardware-Informationspräsentationsmittel (6) eine dedizierte Anzeigeschicht ist, bevorzugt eine zweite Touchscreen-Anzeigeschicht, welche eingegebene Information anzeigt von besagter dedizierten taktilen Schicht (7).

7. Verfahren nach Anspruch 6, wobei besagte dedizierte taktile Schicht (7) und besagte dedizierte Anzeigeschicht (6), transparent für den Endnutzer, auf besagter Anzeigeschicht (10) hinzugefügt werden.

8. Verfahren nach einem beliebigen der Ansprüche 6 oder 7, wobei:
- besagte dedizierte Anzeigeschicht (6) und besagte dedizierte taktile Schicht (7) verbunden sind mit besagtem dedizierten Mikrocontroller (5),
- besagte Anzeigeschicht (10) und besagte taktile Schicht (11) verbunden sind mit besagtem regulären Mikrocontroller (9).

9. Verfahren nach einem beliebigen der Ansprüche 4 bis 8, wobei das Verfahren umfasst den Schritt des Anzeigens der Sicherer-Modus-Anzeige (8) in besagter dedizierten Anzeigeschicht (6), wobei die Sicherer-Modus-Anzeige (8) eine maßgeschneiderte und einfach zu merkende Komponente an Information ist, welche vorher lokal im Innern der SIM-Karte (3) gespeichert war, wobei die maßgeschneiderte und einfach zu merkende Komponente an Information angezeigt wird während der gesamten sicheren Operation, die von der SIM-Karte (3) verwaltet wird.

10. Verfahren nach einem beliebigen der Ansprüche 1 bis 9, wobei das Verfahren die folgenden Schritte umfasst:
- Senden, von der SIM-Karte (3), einer Nachricht, welche anzeigt, ob Information Authentifizierungsinformation ist oder nicht, an den Schalter (4),
- Isolieren besagten regulären Mikrocontrollers (9) von der SIM-Karte (3) über besagten Schalter (4),
- Ermöglichen besagten dedizierten Mikrocontrollers (5) über besagten Schalter (4),
- Ermöglichen besagter Sicherer-Modus-Anzeige (8) über besagten Schalter (4).

11. Verfahren nach einem beliebigen der Ansprüche 1 bis 9, wobei das Verfahren die folgenden Schritte umfasst:
- Ermöglichen besagten dedizierten Mikrocontrollers (5) über einen dedizierten physischen Knopf, der das Umschalten über einen Schalter (4) auslöst oder durchsetzt,
- Isolieren besagten regulären Mikrocontrollers (9) von der SIM-Karte (3) über besagten Schalter (4),
- Ermöglichen besagter Sicherer-Modus-Anzeige (8) über besagten Schalter (4).

12. Verfahren nach eine beliebigen Ansprüche 1 bis 11, wobei besagte Sicherer-Modus-Anzeige (8) eine Leuchtdiode ist, die verbunden ist mit und gestützt wird von der SIM-Karte (3), wobei die Leuchtdiode aktiv ist während der gesamten sicheren Operation, die von der SIM-Karte (3) verwaltet wird.

13. Computerprogramm-Produkt, umfassend computerausführbare Befehle, welche, wenn sie auf einem Computer ausgeführt werden, den Computer veranlassen, ein Verfahren nach einem beliebigen der Ansprüche 1 bis 12 durchzuführen.

14. Computerlesbares Medium, das ein Computerprogramm aufweist, welches Programmbefehle umfasst, wobei das Computerprogramm in eine datenverarbeitende Einheit geladen werden kann und ausgelegt ist zum Bewirken des Ausführens des Verfahrens nach einem beliebigen der Ansprüche 1 bis 12, wenn das Computerprogramm auf der datenverarbeitenden Einheit ausgeführt wird.

15. System für den Echtzeitschutz vor unaufgefordertem Zugriff auf Authentifizierungsinformation, die einem rechtmäßigen Endnutzer bekannt ist, wobei das System umfasst:
- eine SIM-Karte (3), die bereitgestellt wird mit einer dedizierten Anwendung, die ausgelegt ist zum Stützen eines Schalters (4), wobei besagte SIM-Karte (3) konfiguriert ist zum Bestimmen, ob Information, die von einem Telekommunikationsanbieter (2) kommt, authentifiziert werden muss oder nicht,
- einen Schalter (4), der ausgelegt ist zum Stützen durch die SIM-Karte (3), wobei besagter Schalter (4) verbunden ist mit einem Ausgang der SIM-Karte (3), wobei besagter Schalter (4) eine erste Stellung aufweist, die der Information entspricht, welche von dem Telekommunikationsanbieter kommt, die nicht authentifiziert werden muss, und eine zweite Stellung, die besagter authentifizierten Information entspricht, die von dem Telekommunikationsanbieter kommt,
- eine Sicherer-Modus-Anzeige (8), die konfiguriert ist zum Anzeigen, ob der Schalter (4) sich in besagter Stellung befindet, wobei die Sicherer-Modus-Anzeige (8) konfiguriert ist zum Stützen durch die SIM-Karte (3),
- einen regulären Mikrocontroller (9), der verbunden ist mit einem ersten Ausgang besagten Schalters (4), wobei besagter regulärer Mikrocontroller (9) konfiguriert ist zum Stützen durch die SIM-Karte (3) und zum Zugreifen durch ein Betriebssystem, wobei besagter regulärer Mikrocontroller (9) angeordnet ist zum Aktivieren, wenn der Schalter (4) sich in besagter ersten Stellung befindet,
- einen dedizierten Mikrocontroller (5), der verbunden ist mit einem zweiten Ausgang besagten Schalters (4) oder kombiniert mit einem Schalter (4) zum Definieren einer einzelnen elektronischen Komponente, wobei besagter dedizierter Mikrocontroller (5) konfiguriert ist zum Stützen durch die SIM-Karte (3), wobei besagter dedizierter Mikrocontroller (5) konfiguriert ist zum Aktivieren, wenn der Schalter (4) sich in besagter zweiten Stellung befindet,
- ein Hardware-Informationspräsentationsmittel (10),
- ein Eingabemittel (11);
wobei besagtes System angeordnet ist, sodass:
- wenn der Schalter (4) sich in besagter ersten Stellung befindet, besagtes Hardware-Informationspräsentationsmittel (10) und besagtes Eingabemittel (11) konfiguriert sind zum Zugriff durch besagten regulären Mikrocontroller (9),
- wenn der Schalter (4) sich in besagter zweiten Stellung befindet und auf Grundlage von Verkabelungen zwischen besagtem Schalter (4) und dem regulären Mikrocontroller (9) in Hinblick auf die Authentifizierungsinformation:
o wobei besagtes Hardware-Informationspräsentationsmittel (10) und besagtes Eingabemittel (11) konfiguriert sind zum exklusiven Zugriff durch besagten regulären Mikrocontroller (5), oder
o wobei besagtes Eingabemittel (11) und ein zusätzliches Hardware-Informationspräsentationsmittel (6) konfiguriert sind zum exklusiven Zugriff durch besagten dedizierten Mikrocontroller (5), wobei besagtes Hardware-Informationspräsentationsmittel (6) konfiguriert ist zum Anzeigen von Information, die eingegeben worden ist von besagtem Eingabemittel (11), oder
o ein zusätzliches Hardware-Informationspräsentationsmittel (6) und ein zusätzliches Eingabemittel (7) konfiguriert sind zum exklusiven Zugriff durch besagten dedizierten Mikrocontroller (5), wobei besagtes zusätzliche Hardware-Informationspräsentationsmittel (6) konfiguriert ist zum Anzeigen von Information, die von besagtem zusätzlichen Eingabemittel (7) eingegeben worden ist.

## Revendications

1. Procédé de protection en temps réel contre un accès non sollicité à des informations d'authentification connues par un utilisateur final légitime, le procédé comprenant les étapes suivantes :
- déterminer par une carte SIM (3) si des informations provenant d'un opérateur de télécommunications (2) doivent être authentifiées ou non,
- indiquer visuellement, par un indicateur de mode sécurisé (8), que lesdites informations provenant d'un opérateur de télécommunications (2) sont des informations d'authentification, ledit indicateur de mode sécurisé (8) étant commandé par une carte SIM (3),
- activer un microcontrôleur ordinaire (9) par un commutateur (4) lorsque lesdites informations ne sont pas des informations d'authentification, ledit microcontrôleur ordinaire (9) étant commandé par la carte SIM (3) et connecté à une première sortie dudit commutateur (4), ledit commutateur (4) étant connecté à une sortie de la carte SIM (3) de façon à être commandé par ladite carte SIM (3), ledit microcontrôleur ordinaire (9) étant accessible par un système d'exploitation,
- activer un microcontrôleur spécialisé (5) par le commutateur (4) lorsque lesdites informations sont des informations d'authentification, ledit microcontrôleur spécialisé (5) étant commandé par la carte SIM (3) et connecté à une deuxième sortie dudit commutateur (4) ou combiné avec le commutateur (4) de façon à former un composant électronique unique,
- présenter les informations par des moyens de présentation d'informations matériels (10),
- entrer les informations par des moyens d'entrée (11),
dans lequel, lorsque lesdites informations ne sont pas des informations d'authentification, lesdits moyens de présentation d'informations matériels (10) et lesdits moyens d'entrée (11) sont accessibles par ledit microcontrôleur ordinaire (9), et lorsque lesdites informations sont des informations d'authentification, le procédé met en oeuvre l'une des étapes suivantes sur la base de connexions entre ledit commutateur (4) et le microcontrôleur ordinaire (9) au vu des informations d'authentification :
a) lesdits moyens de présentation d'informations matériels (10) et lesdits moyens d'entrée (11) sont accessibles exclusivement par ledit microcontrôleur spécialisé (5), ou
b) lesdits moyens d'entrée (11) et des moyens de présentation d'informations matériels supplémentaires (6) sont exclusivement accessibles par ledit microcontrôleur spécialisé (5), lesdits moyens de présentation d'informations matériels supplémentaires (6) affichant les informations entrées provenant desdits moyens d'entrée (11), ou
c) des moyens de présentation d'informations matériels supplémentaires (6) et des moyens d'entrée supplémentaires (7) sont exclusivement accessibles par ledit microcontrôleur spécialisé (5), lesdits moyens de présentation d'informations matériels supplémentaires (6) affichant les informations entrées provenant desdits moyens d'entrée supplémentaires (7).

2. Procédé selon la revendication 1 comprenant l'étape a), dans lequel :
- lesdits moyens de présentation matériels (10) sont constitués d'une couche d'affichage d'écran tactile,
- lesdits moyens d'entrée (11) sont constitués d'une couche de capteur tactile d'écran tactile, ladite couche de capteur tactile d'écran tactile (11) étant mise en oeuvre par l'intermédiaire de ladite couche d'affichage d'écran tactile (10).

3. Procédé selon la revendication 2, dans lequel :
ladite couche d'affichage d'écran tactile et ladite couche de capteur tactile d'écran tactile sont connectées audit commutateur (4) afin d'être commandées par ledit microcontrôleur spécialisé (5) ou par ledit microcontrôleur ordinaire (9), l'accès dudit microcontrôleur ordinaire (9) à ladite couche d'affichage d'écran tactile et à ladite couche de capteur tactile d'écran tactile étant empêché par le commutateur (4) lorsque le microcontrôleur spécialisé (5) accède à la couche d'affichage d'écran tactile et à la couche de capteur tactile d'écran tactile.

4. Procédé selon la revendication 1 comprenant l'étape b), dans lequel :
- lesdits moyens de présentation d'informations matériels (10) sont constitués d'une couche d'affichage d'écran tactile,
- lesdits moyens de présentation d'informations matériels supplémentaires sont constitués d'une couche d'affichage spécialisée (6),
- lesdits moyens d'entrée (11) sont constitués d'une couche de capteur tactile d'écran tactile comprenant des touches, ladite couche de capteur tactile d'écran tactile (11) étant mise en oeuvre par l'intermédiaire de ladite couche d'affichage d'écran tactile (10) ou par l'intermédiaire de ladite couche d'affichage spécialisée (6), lesdites touches de la couche de capteur tactile d'écran tactile (11) étant mélangées lorsque la couche de capteur tactile d'écran tactile (11) est mise en oeuvre par l'intermédiaire de ladite couche d'affichage spécialisée (6).

5. Procédé selon la revendication 4, dans lequel :
- ladite couche d'affichage spécialisée (6) est connectée audit microcontrôleur spécialisé (5),
- ladite couche d'affichage d'écran tactile est connectée audit microcontrôleur ordinaire (9),
ladite couche de capteur tactile d'écran tactile (11) est connectée audit commutateur (4) afin d'être commandée par ledit microcontrôleur spécialisé (5) ou par ledit microcontrôleur ordinaire (9), l'accès dudit microcontrôleur ordinaire (9) à ladite couche de capteur tactile d'écran tactile étant empêché par le commutateur (4) lorsque ledit microcontrôleur spécialisé (5) accède à la couche de capteur tactile d'écran tactile.

6. Procédé selon la revendication 1 comprenant l'étape c), dans lequel :
- lesdits moyens d'entrée (11) sont constitués d'une couche tactile (11), de préférence une couche de capteur tactile d'écran tactile,
- lesdits moyens de présentation d'informations matériels (10) sont constitués d'une couche d'affichage, de préférence une couche d'affichage d'écran tactile, qui affiche les informations entrées qui ne doivent pas être authentifiées,
- lesdits moyens d'entrée supplémentaires (7) sont constitués d'une couche tactile spécialisée, de préférence une deuxième couche de capteur tactile d'écran tactile,
- lesdits moyens de présentation d'informations matériels supplémentaires (6) sont constitués d'une couche d'affichage spécialisée, de préférence une deuxième couche d'affichage d'écran tactile, qui affiche les informations entrées provenant de ladite couche tactile spécialisée (7).

7. Procédé selon la revendication 6, dans lequel ladite couche tactile spécialisée (7) et ladite couche d'affichage spécialisée (6) sont, de façon transparente pour l'utilisateur final, ajoutées au-dessus de ladite couche d'affichage (10).

8. Procédé selon l'une quelconque des revendications 6 ou 7, dans lequel :
- ladite couche d'affichage spécialisée (6) et ladite couche tactile spécialisée (7) sont connectées audit microcontrôleur spécialisé (5),
- ladite couche d'affichage (10) et ladite couche tactile (11) sont connectées audit microcontrôleur ordinaire (9).

9. Procédé selon l'une quelconque des revendications 4 à 8, le procédé comprenant l'étape d'affichage de l'indicateur de mode sécurisé (8) dans ladite couche d'affichage spécialisée (6), l'indicateur de mode sécurisé (8) étant un élément d'information personnalisé et facile à mémoriser qui a été stocké au préalable localement à l'intérieur de la carte SIM (3), l'élément d'information personnalisé et facile à mémoriser étant affiché pendant la totalité de l'opération sécurisée gérée par la carte SIM (3).

10. Procédé selon l'une quelconque des revendications 1 à 9, le procédé comprenant les étapes suivantes :
- envoyer, depuis la carte SIM (3), un message indiquant si les informations sont des informations d'authentification ou non au commutateur (4),
- isoler ledit microcontrôleur ordinaire (9) de la carte SIM (3) par l'intermédiaire dudit commutateur (4),
- activer ledit microcontrôleur spécialisé (5) par l'intermédiaire dudit commutateur (4),
- activer ledit indicateur de mode sécurisé (8) par l'intermédiaire dudit commutateur (4).

11. Procédé selon l'une quelconque des revendications 1 à 9, le procédé comprenant les étapes suivantes :
- activer ledit microcontrôleur spécialisé (5) par l'intermédiaire d'un bouton physique spécialisé qui déclenche ou applique la commutation par l'intermédiaire d'un commutateur (4),
- isoler ledit microcontrôleur ordinaire (9) de la carte SIM (3) par l'intermédiaire dudit commutateur (4),
- activer ledit indicateur de mode sécurisé (8) par l'intermédiaire dudit commutateur (4).

12. Procédé selon l'une quelconque des revendications 1 à 11, dans lequel ledit indicateur de mode sécurisé (8) est une diode électroluminescente connectée à et commandée par la carte SIM (3), la diode électroluminescente étant active pendant la totalité de l'opération sécurisée gérée par la carte SIM (3).

13. Produit-programme informatique comprenant des instructions exécutables par un ordinateur qui, lorsqu'elles sont exécutées par un ordinateur, commandent à l'ordinateur de mettre en oeuvre un procédé selon l'une quelconque des revendications 1 à 12.

14. Support lisible par un ordinateur contenant un programme informatique comprenant des instructions de programme, le programme informatique pouvant être chargé dans une unité de traitement de données et adapté pour provoquer l'exécution du procédé selon l'une quelconque des revendications 1 à 12 lorsque le programme informatique est exécuté par l'unité de traitement de données.

15. Système de protection en temps réel contre un accès non sollicité à des informations d'authentification connues par un utilisateur final légitime, le système comprenant :
- une carte SIM (3) fournie avec une application spécialisée adaptée pour commander un commutateur (4), ladite carte SIM (3) étant configurée pour déterminer si les informations provenant d'un opérateur de télécommunications (2) doivent être authentifiées ou non,
- un commutateur (4) adapté pour être commandé par la carte SIM (3), ledit commutateur (4) étant connecté à une sortie de la carte SIM (3), ledit commutateur (4) disposant d'une première position correspondant auxdites informations provenant de l'opérateur de télécommunications qui ne doivent pas être authentifiées et d'une deuxième position correspondant auxdites informations d'authentification provenant de l'opérateur de télécommunications,
- un indicateur de mode sécurisé (8) configuré pour indiquer si le commutateur (4) est dans ladite deuxième position, ledit indicateur de mode sécurisé (8) étant configuré pour être commandé par la carte SIM (3),
- un microcontrôleur ordinaire (9) connecté à une première sortie dudit commutateur (4), ledit microcontrôleur ordinaire (9) étant configuré pour être commandé par la carte SIM (3) et accessible par un système d'exploitation, ledit microcontrôleur ordinaire (9) étant conçu pour être activé lorsque le commutateur (4) est dans ladite première position,
- un microcontrôleur spécialisé (5) connecté à une deuxième sortie dudit commutateur (4) ou combiné avec un commutateur (4) de façon à former un composant électronique unique, ledit microcontrôleur spécialisé (5) étant configuré pour être commandé par la carte SIM (3), ledit microcontrôleur spécialisé (5) étant configuré pour être activé lorsque le commutateur (4) est dans ladite deuxième position,
- des moyens de présentation d'informations matériels (10),
- des moyens d'entrée (11),
ledit système étant conçu de sorte que :
- lorsque le commutateur (4) est dans ladite première position, lesdits moyens de présentation d'informations matériels (10) et lesdits moyens d'entrée (11) sont configurés pour être accessibles par ledit microcontrôleur ordinaire (9),
- lorsque le commutateur (4) est dans ladite deuxième position et sur la base des connexions entre ledit commutateur (4) et le microcontrôleur ordinaire (9) au vu des informations d'authentification :
o lesdits moyens de présentation d'informations matériels (10) et lesdits moyens d'entrée (11) sont configurés pour être exclusivement accessibles par ledit microcontrôleur spécialisé (5), ou
o lesdits moyens d'entrée (11) et des moyens de présentation d'informations matériels supplémentaires (6) sont configurés pour être exclusivement accessibles par ledit microcontrôleur spécialisé (5), lesdits moyens de présentation d'informations matériels supplémentaires (6) étant configurés pour afficher les informations entrées provenant desdits moyens d'entrée (11), ou
o des moyens de présentation d'informations matériels supplémentaires (6) et des moyens d'entrée supplémentaires (7) sont configurés pour être exclusivement accessibles par ledit microcontrôleur spécialisé (5), lesdits moyens de présentation d'informations matériels supplémentaires (6) étant configurés pour afficher les informations entrées provenant desdits moyens d'entrée (7).
